# EUROPÄISCHE PATENTSCHRIFT

(11) **EP 2 539 090 B1**
(45) Veröffentlichungstag und Bekanntmachung des Hinweises auf die Patenterteilung: **18.02.2015**
(21) Anmeldenummer: 11743431.6
(22) Anmeldetag: 27.06.2011
(51) Int. Cl.: F16D 57/04, B22C 9/00, B22C 9/10, B22C 9/24

(54) **STATOR UND VERFAHREN ZUM HERSTELLEN EINES STATORS**
STATOR AND METHOD FOR PRODUCING A STATOR
STATOR ET PROCÉDÉ DE PRODUCTION D'UN STATOR

(30) Priorität: 30.06.2010 DE 102010025678
(43) Veröffentlichungstag der Anmeldung: 02.01.2013
(73) Patentinhaber: Voith Patent GmbH, 89522 Heidenheim (DE)
(72) Erfinder: LAUKEMANN, Dieter, 74564 Crailsheim (DE); OHR, Thomas, 74564 Crailsheim (DE)
(74) Vertreter: Dr. Weitzel & Partner
(86) Internationale Anmeldenummer: PCT/EP2011/003148
(87) Internationale Veröffentlichungsnummer: WO 2012/000636

(56) Entgegenhaltungen:
- EP-A1- 1 529 580
- EP-A1- 1 749 597
- DE-A1-102009 039 537
- DE-B3-102005 013 464

## Beschreibung

Die Erfindung betrifft einen Stator für einen hydrodynamischen Retarder nach der im Oberbegriff von Anspruch 1 näher definierten Art. Ferner betrifft die Erfindung ein Verfahren zum Herstellen eines Stators nach der im Oberbegriff von Anspruch 4 näher definierten Art.

Aus der deutschen Patentschrift DE 10 2005 013 464 B3 ist ein Verfahren zur Herstellung eines Schaufelrads mit Öffnungen, insbesondere Auslassöffnungen, bekannt. Da die Lage der Auslassöffnungen insbesondere bei der Verwendung des Schaufelrads als Stator für einen hydrodynamischen Retarder von entscheidender Bedeutung ist, ist ihre exakte Positionierung relativ zu den Schaufeln entscheidend. Dies ist durch eine reine spanende Bearbeitung nur mit erheblichem Aufwand zu erreichen. Daher schlägt das oben genannte deutsche Patent vor, vorgegossene Öffnungen beim Gießen des Schaufelrads zu integrieren. Die in der Patentschrift als vorgegossene Öffnungen bezeichneten gegossenen Teile sind dabei letztlich Positionsmarken, welche bei der nachfolgenden spanenden Bearbeitung die exakte Positionierung eines Bohrwerkzeugs erleichtern. Deshalb werden die Öffnungen so eingebracht, dass diese sich von einer Seite in die Oberfläche des Schaufelrads erstrecken und auf der anderen Seite mit entsprechenden Gussmulden enden, welche als unebene Erhebung gegenüber der benachbarten Schaufelradoberfläche zu erkennen sind. Damit lässt sich mit hoher Wiederholgenauigkeit ein Bohren der Öffnungen realisieren.

Gemäß dem weiteren allgemeinen Stand der Technik wäre es eine Alternative zum Bohren, Auslassöffnungen durch Freidrehen eines Ringspalts auf der Rückseite einer Toruswand des Stators zu realisieren. Dies hat jedoch den Nachteil, dass beim Überdrehen der Schaufeln ein unterbrochener Schnitt entsteht, welcher das Werkzeug stark belastet. Außerdem können die Auslassöffnungen nicht gezielt in Umfangsrichtung zwischen den einzelnen Schaufeln platziert werden, sondern sind dadurch, dass sie als Ringspalt ausgeführt sind, nur in radialer Richtung gezielt zu platzieren.

Neben der Problematik, die Auslassöffnungen bei der spanenden Bearbeitung exakt so auszugestalten und zu platzieren, dass sie die geforderte Aufgabe ideal erfüllen, hat die spanende Bearbeitung immer den Nachteil, dass diese vergleichsweise aufwändig ist und in der Produktion einen vergleichsweise hohen Zeitbedarf verursacht. Werkzeugverschleiß und die erforderlichen Maschinen erhöhen die Produktionskosten des Schaufelrads, beispielsweise für einen hydrodynamischen Retarder, zusätzlich. Zum weiteren Stand der Technik wird auf die folgenden Dokumente verwiesen: EP 1529580 A1, EP 1749597 A1 und DE 10 2009 039537 A1.

Es ist nun die Aufgabe der hier vorliegenden Erfindung einen Stator anzugeben, welcher einfach, effizient und kostengünstig herstellbar ist und eine hohe Funktionalität aufweist. Ferner soll die Belastung insbesondere des Sammelraums für das abströmende Arbeitsmedium aufgrund Erosion und Kavitation reduziert werden.

Erfindungsgemäß wird diese Aufgabe durch einen Stator gelöst, welcher die im kennzeichnenden Teil von Anspruch 1 genannten Merkmale aufweist. Weitere vorteilhafte Ausgestaltungen des Stators sind dabei in den hiervon abhängigen Unteransprüchen angegeben. Ferner wird die oben genannte Aufgabe außerdem durch ein Verfahren zum Herstellen eines Stators gelöst, welches die Merkmale im kennzeichnenden Teil des Anspruchs 3 aufweist. Vorteilhafte Ausgestaltungen und Weiterbildungen des Verfahrens sind dabei in den hiervon abhängigen Unteransprüchen angegeben.

Bei dem erfindungsgemäßen Stator ist es demnach vorgesehen, dass die Schaufeln und die Toruswand mit den darin angeordneten Auslassöffnungen als ein integriertes Bauteil durch Gießen hergestellt wird. Die Schaufeln und die Toruswand, welche letztlich die Grundform des Stators bilden, werden also zusammen mit den Auslassöffnungen beim Gießen in einem einzigen Produktionsschritt hergestellt. Dadurch entfällt eine mechanische, insbesondere eine spanende Nachbearbeitung durch Bohren oder Freidrehen der Auslassöffnungen. Der Aufbau kann neben den beschriebenen Bauteilen im selben Gussteil selbstverständlich weitere Elemente, wie beispielsweise einen Flansch, eine Aufnahme oder dergleichen mit aufweisen.

Die Tatsache, dass die Auslassöffnungen im Bereich der Toruswand unmittelbar mit eingegossen werden und nicht spanend bearbeitet werden müssen, erlaubt es den Stator sehr einfach, effizient und kostengünstig herzustellen. Die Kontur und die Auslassöffnungen im Bereich der Toruswand können dann unmittelbar verwendet werden. Gegebenenfalls werden in den Stator nachfolgend beispielsweise über eine spanende Bearbeitung noch geeignete Einlassöffnungen, typischerweise im Bereich von sogenannten Einlassschaufeln, mit angeordnet. Dies ist auch nicht Gegenstand der Erfindung und soll deshalb hier nicht näher beschrieben werden.

Außerdem ist es vorgesehen, dass die Auslassöffnungen einen sich in Strömungsrichtung vergrößernden durchströmbaren Querschnitt aufweisen. Die Auslassöffnungen werden also so in die Toruswand mit eingegossen, dass diese sich in Strömungsrichtung eines aus dem Retarder abströmenden Arbeitsmediums im Querschnitt vergrößern. Die Auslassöffnungen haben in dem Bereich, in dem sie in den Innenraum, den späteren Arbeitsraum des hydrodynamischen Retarders münden, einen kleineren Durchmesser als auf der dem Innenraum abgewandten Seite der Toruswand. Durch diese Vergrößerung des Strömungsquerschnitts wird erreicht, dass ein durch die Auslassöffnungen strömendes Arbeitsmedium eine Reduzierung seiner Strömungsgeschwindigkeit erfährt. Durch diese Reduzierung der Strömungsgeschwindigkeit wird die Belastung der angrenzenden Bauteile, insbesondere eines Sammelraums für das abströmende Arbeitsmedium, deutlich reduziert, da hierdurch weniger Erosion und weniger Kavitation auftritt. Die Querschnittsänderung kann dabei kontinuierlich und/oder in einer oder mehreren Stufen erfolgen.

Das erfindungsgemäße Verfahren sieht zur Lösung der oben genannten Aufgabe vor, dass die Auslassöffnungen beim Gießen durch geeignete Kerne mit eingebracht werden. Diese Kerne sorgen also dafür, dass beim Gießen des integrierten Bauteils aus Schaufeln und Toruswand sowie der hiermit gegebenenfalls verbundenen Aufnahmeflansche oder dergleichen in einem einzigen Arbeitsschritt ein Aufbau entsteht, welcher die Auslassöffnungen bereits aufweist, sodass dieser zumindest im Bereich der Auslassöffnungen nicht mehr spanend nachbearbeitet werden muss. Das Verfahren ermöglicht es so, den Stator sehr einfach, schnell und kostengünstig herzustellen.

In einer besonders günstigen Weiterbildung des erfindungsgemäßen Verfahrens ist es dabei ferner vorgesehen, dass der Stator in einer Gussform aus wenigstens zwei Formenteilen gegossen wird, wobei das erste Formenteil die Innenkontur der Toruswand mit den Schaufeln und das zweite Formenteil die Außenkontur der Toruswand abbildet. Dieser Aufbau mit den wenigstens zwei Formenteilen ermöglicht es, den Stator einfach und effizient in mehrfach verwendbaren Dauerformen durch Gießen herzustellen.

In einer sehr vorteilhaften Weiterbildung hiervon ist es dabei vorgesehen, dass bei der Ausgestaltung der Formenteile jeweils ein sich in Richtung der Auslassöffnung über einen Teil der Tiefe der Auslassöffnung erstreckender Kernabschnitt mit jeweils einem der Formenteile verbunden wird, wobei die axiale Ausdehnung der beiden Kernabschnitte zusammen der Gesamttiefe der Auslassöffnung entspricht. Diese Aufteilung des Kerns zum Ausbilden der Auslassöffnung während des Gießens in zwei Kernabschnitte, welche jeweils mit einem der Formenteile verbunden sind, hat dabei den entscheidenden Vorteil, dass die in ihrem Durchmesser vergleichsweise kleinen und damit relativ dünnen Kernabschnitte jeweils kürzer ausgebildet sind, als dies bei einem einzigen Kern der Fall wäre. Dadurch wird die Stabilität der beiden Kernabschnitte erhöht und die sichere und zuverlässige Funktionsweise der Gussform beim Gießen über eine vergleichsweise lange Standzeit hinweg gewährleistet.

In einer günstigen Ausgestaltung des erfindungsgemäßen Verfahrens ist es außerdem vorgesehen, dass der mit dem ersten Formenteil verbundene Kernabschnitt einen geringeren Durchmesser aufweist als der mit dem zweiten Formenteil verbundene Kernabschnitt. Durch diesen Aufbau können zwei Kernabschnitte verwendet werden, welche im Wesentlichen denselben Durchmesser über ihre gesamte axiale Ausdehnung aufweisen. Der mit dem ersten Formenteil verbundene Kernabschnitt, welcher auf der Innenseite der Toruswand, also der Seite, welche später dem Arbeitsraum zugewandt sein wird, angeordnet ist, weist dabei einen geringeren Durchmesser auf, als der Kernabschnitt, welcher mit dem zweiten Formenteil auf der Außenseite des Stators verbunden ist. Dadurch wird die Auslassöffnung gestuft und bevorzugt mit einer Stufe in ihrem Durchmesser vergrößert. Wie bereits oben erwähnt, wird durch einen solchen sich vergrößernden Querschnitt der Auslassöffnung im späteren Betrieb des Retarders die Strömungsgeschwindigkeit für das Arbeitsmedium beim Durchströmen der Auslassöffnungen entsprechend reduziert. Hierdurch können angrenzende Bauteile besser vor einer Belastung durch Erosion und Kavitation geschützt werden, sodass hierdurch sehr einfach und effizient ein sehr langlebiger Aufbau für den Retarder mit einem Stator, welcher gemäß der Erfindung ausgebildet ist, entsteht.

Die Ausgestaltung der Kernabschnitte mit unterschiedlichen Durchmessern hat darüber hinaus den Vorteil, dass beim Zusammenführen der Formenteile die beiden Kernabschnitte aneinander anliegen. Würden diese denselben Durchmesser aufweisen, so könnten bereits minimale Verschiebungen des einen Formenteils gegenüber dem anderen Formenteil zu einem Verschieben der vergleichsweise dünnen Kerne gegeneinander führen, sodass der Strömungsquerschnitt entsprechend verringert ist. Bei einem Kernabschnitt, welcher mit dem zweiten Formenteil verbunden ist und welcher einen größeren Durchmesser als der mit dem ersten Formenteil verbundene Kernabschnitt aufweist, ist dies vergleichsweise unkritisch, da der mit dem ersten Formenteil verbundene Kernabschnitt den minimalen durchströmbaren Querschnitt definiert und unabhängig von einer exakten Positionierung des zweiten Kernabschnitts diesen Querschnitt auch immer freihält.

Weitere vorteilhafte Ausgestaltungen des erfindungsgemäßen Stators sowie des erfindungsgemäßen Verfahrens zum Herstellen eines Stators ergeben sich aus den restlichen unabhängigen Unteransprüchen oder werden anhand des Ausführungsbeispiels deutlich, welches nachfolgend unter Bezugnahme auf die Figuren näher erläutert wird.

Dabei zeigen:
- Fig. 1: einen Schnitt durch einen hydrodynamischen Retarder in einer beispielhaften Ausgestaltung gemäß der Erfindung;
- Fig. 2: eine Ansicht eines Ausschnitts des Stators des hydrodynamischen Retarders in einer Ausgestaltung gemäß der Erfindung;
- Fig. 3: eine Ansicht gemäß der Blickrichtung III in Fig. 2; und
- Fig. 4: eine Darstellung analog Fig. 2 mit der Gussform.

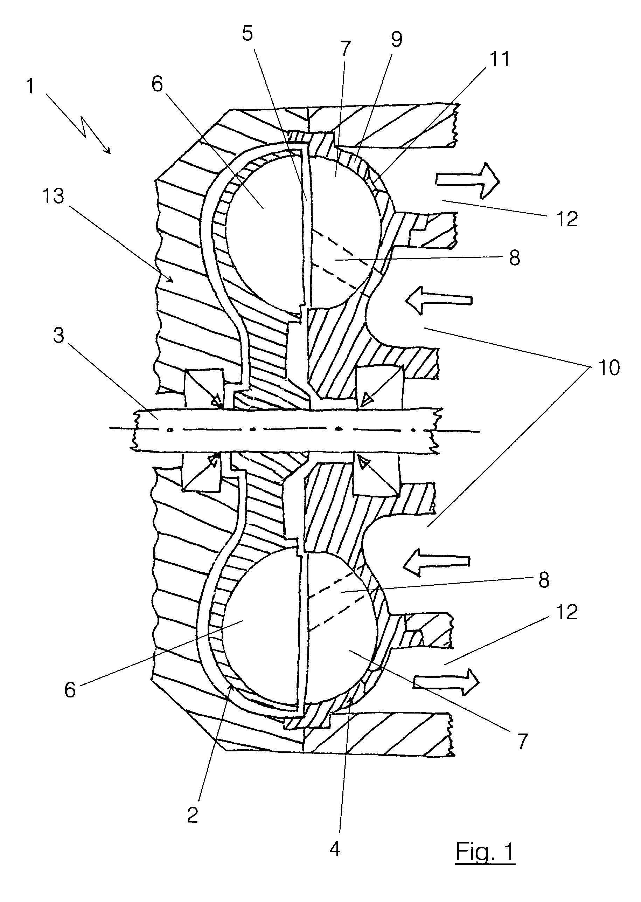

In der Darstellung der Figur 1 ist ein hydrodynamischer Retarder 1 zu erkennen. Dieser kann beispielsweise in einem Antriebsstrang eines Fahrzeugs, insbesondere eines Nutzfahrzeugs, eingesetzt sein, um dieses verschleißfrei abzubremsen. Im hydrodynamischen Retarder 1 läuft ein Rotor 2 mit einer Welle 3 um, welche beispielsweise über einen Nebenabtrieb des Getriebes oder Ähnliches angetrieben sein kann. Der Rotor 2 bildet zusammen mit einem Stator 4 einen Arbeitsraum 5, in welchem ein geeignetes Arbeitsmedium, beispielsweise Öl, zum Erzeugen des gewünschten Bremsmoments umgewälzt wird. Sowohl der Rotor 2 als auch der Stator 4 weisen dabei einen Grundkörper auf, welcher in etwa die Form eines halben Torus aufweist. In den einander zugewandten Bereichen sind der Rotor 2 und der Stator 4 mit Schaufeln 6, 7 versehen. Rotor 2 und Stator 4 bilden zusammen den in etwa torusförmigen Arbeitsraum 5 aus. Über Einlassöffnungen 8 im Bereich des Stators 4 wird während des Betriebs des Retarders 1 das Arbeitsmedium angesaugt. Das Arbeitsmedium strömt dabei durch eine Toruswand 9 sowie durch die typischerweise in Schaufeln 7 angeordneten Einlassöffnungen 8 in den Arbeitsraum 5. Das Arbeitsmedium strömt dabei über einen Einlassraum 10 in den Bereich der Einlassöffnungen 8 auf der dem Arbeitsraum 5 abgewandten Seite der Toruswand 9. Außerdem sind im Bereich der Toruswand 9 Auslassöffnungen 11 angeordnet, welche im Bereich der Toruswand 9 zwischen jeweils zwei Schaufeln 7 des Stators 4 angeordnet sind. Dabei ist es möglich, dass nur zwischen einigen der Schaufeln 7 die Auslassöffnungen 11 angeordnet sind, prinzipiell ist es jedoch auch möglich, zwischen allen Schaufeln 7 jeweils eine oder gegebenenfalls auch mehrere Auslassöffnungen 11 anzuordnen. Die Auslassöffnungen 11 führen das aus dem Arbeitsraum 5 abströmende Medium in einen Auslasssammelraum 12 und von diesem Auslasssammelraum 12 durch einen geeigneten Kreislauf, sowie gegebenenfalls eine Fördereinrichtung, wieder zurück zum Einlasssammelraum 10, um bei weiterhin bestehenden Betrieb des Retarders 1 dieses Medium über die Einlassöffnungen 8 wieder dem Arbeitsraum 5 zuzuführen. Der Stator 4 ist dabei Teil eines Retardergehäuses 13, welches auch den Rotor 2 umschließt und geeignete Abdichtungen/Lagerungen für die Welle 3 aufweist.

Die grundlegende Funktionsweise eines solchen Retarders 1 ist aus dem Stand der Technik bekannt. Er kann beispielsweise mit Öl oder auch direkt mit dem Kühlwasser beziehungsweise Kühlmedium des Antriebsstrangs betrieben werden. Im Falle des Betriebs mit Öl wird dieses über einen Wärmetauscher außerhalb des hydrodynamischen Retarders 1 entsprechend abgekühlt, beispielsweise durch das Kühlmedium im Kühlkreislauf des Antriebsstrangs.

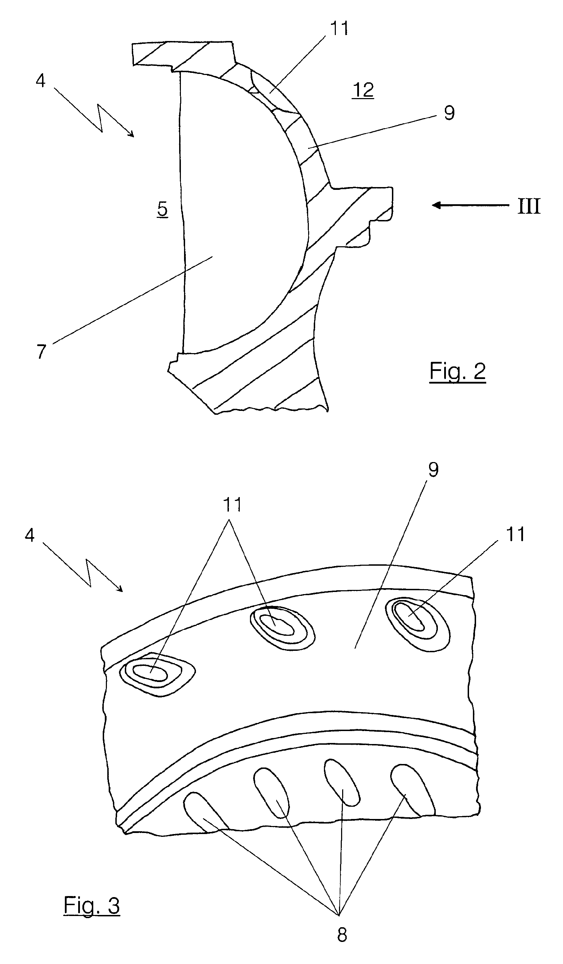

Problematisch ist nun das Einbringen der Auslassöffnungen 11 in die Toruswand 9 des Stators 4, wie dies eingangs bereits beschrieben wurde. In der Darstellung der Figur 2 ist daher ein vergrößerter Ausschnitt des Stators 4 mit in den Stator 4 einbebrachter Auslassöffnung 11 zu erkennen. Auf die bereits im Rahmen der Figur 1 beschriebene Einlassöffnung 8 wurde in der Darstellung der Figur 2 verzichtet. Die Auslassöffnung 11, welche in Figur 2 dargestellt ist, liegt entsprechend dem hier ausgewählten Schnitt zwischen zwei der Schaufeln 7, von welchen hier nur eine in der Schnittdarstellung zu erkennen ist. Die Auslassöffnung 11 ist dabei so ausgebildet, dass sie sich in Strömungsrichtung des durch die Auslassöffnung 11 strömenden Mediums, also von dem Arbeitsraum 5 hin zu dem Auslasssammelraum 12 in ihrem Querschnitt erweitert. Sie ist zusammen mit der Toruswand 9 und den Schaufeln 7 des Stators 4 sowie zusammen mit entsprechenden Anschlusselementen, Flanschen oder dergleichen des Stators 4 als integriertes Bauteil ausgeführt und durch Gießen hergestellt. Die Auslassöffnungen 11 werden dabei beim Gießen unmittelbar mit in die Toruswand 9 eingebracht, sodass diese nicht spanend nachbearbeitet werden müssen. Dies sichert einen einfachen, schnellen und kostengünstigen Herstellungsprozess des Stators 4. Die Querschnittserweiterung der Auslassöffnung 11 in Strömungsrichtung von dem Arbeitsraum 5 hin zu dem Auslasssammelraum 12 ist hier so ausgebildet, dass diese in wenigstens einer Stufe erfolgt. Durch die Querschnittserweiterung in Strömungsrichtung ergibt sich eine Verringerung der Strömungsgeschwindigkeit des aus dem Arbeitsraum 5 abströmenden Arbeitsmediums des Retarders 1 beim Durchströmen der Auslassöffnung 11. Dadurch werden Probleme im Bereich angrenzender Bauteile, und hier insbesondere im Bereich des Sammelraums 12 durch Erosion oder Kavitation, wie sie bei einer höheren Strömungsgeschwindigkeit des Arbeitsmediums beim Eintritt in den Auslasssammelraum 12 auftreten könnten, sicher und zuverlässig vermieden.

In der Darstellung der Figur 3 ist eine Ansicht der die Außenseite des Stators 4 des hydrodynamischen Retarders 1 zu erkennen. Deutlich sind dabei die Auslassöffnungen 11 zu sehen, welche einen sich verjüngenden Querschnitt aus der hier dargestellten Blickrichtung aufweisen. Im unteren Bereich des dargestellten Ausschnitts sind außerdem Einlassöffnungen 8 zu erkennen, welche im Rahmen der Figur 1 bereits beschrieben worden sind und nicht Gegenstand der hier vorliegenden Anmeldung sein sollen.

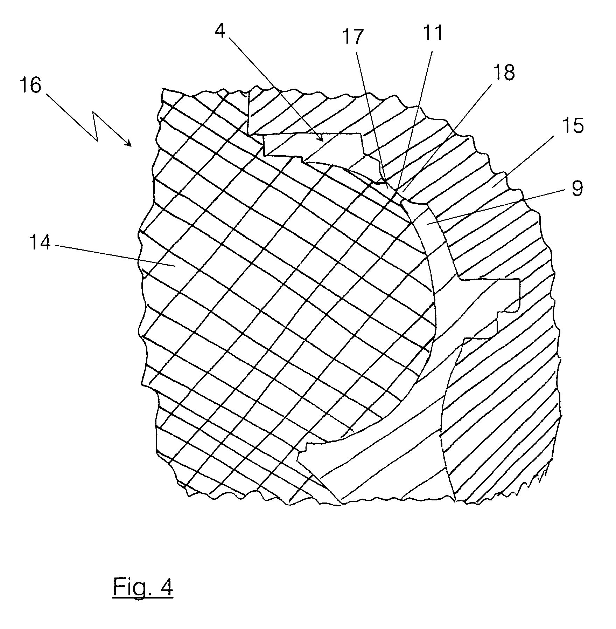

Die Herstellung des Stators 4 in der erfindungsgemäßen Ausgestaltung gemäß Figur 2 erfolgt, wie bereits erwähnt, durch Gießen, wobei die Auslassöffnungen 11 unmittelbar beim Gießen mit eingebracht werden und ohne spanende Nachbearbeitung verwendbar sind. In der Darstellung der Figur 4 ist ein entsprechender Ausschnitt des Stators 4 analog zur Darstellung in Figur 2 nochmals zu erkennen. Zusätzlich zum Stator 4 sind hier zwei Formenteile 14, 15 einer in ihrer Gesamtheit nicht vollständig zu erkennenden Gussform 16 dargestellt. Das erste Formenteil 14 bildet dabei die Innenseite des Stators 4 aus, das zweite Formenteil 15 bildet die Außenkontur des Stators 4 und hier insbesondere die Außenkontur der Toruswand 9 aus. Die Auslassöffnung 11 durch die Toruswand 9 wird dabei so ausgebildet, dass im Bereich der Auslassöffnung 11 während des Gießens ein Kern beziehungsweise zwei Kernabschnitte 17, 18 angeordnet sind. In der Darstellung der Figur 4 ist zu erkennen, dass ein erster Kernabschnitt 17, welcher den Bereich der Auslassöffnung 11 mit dem kleineren Durchmesser freihält, mit dem ersten Formenteil 14 verbunden ist. Ein zweiter Kernabschnitt 18 für den Bereich der Auslassöffnung 11 mit dem größeren Durchmesser ist entsprechend mit dem zweiten Formenteil 15 verbunden. Die Kernabschnitte 17, 18 können dabei mit dem jeweiligen Formenteil 14, 15 verbunden oder auch einstückig mit diesem ausgestaltet sein.

Der Vorteil die Trennlinie zwischen den Formenteilen 14, 15 in den Bereich der Toruswand 9 zu verlegen, besteht insbesondere in der Ausgestaltung der Kernabschnitte 17, 18. Da diese vergleichsweise dünn ausgebildet sind, würde ein durchgehender Kern vergleichsweise empfindlich sein und könnte leicht verschleißen oder beschädigt werden. Durch die Reduzierung der Länge des Kerns, in dem dieser durch die beiden Kernabschnitte 17, 18 ausgebildet ist, wird diese Problematik deutlich entschärft. Jeder der Kernabschnitte 17, 18 für sich ist im Verhältnis zu seinem Durchmesser in axialer Richtung vergleichsweise kurz ausgebildet und kann so entsprechend stabil gestaltet werden. Damit lassen sich hohe Standzeiten der Formenteile 14, 15 der Gussform 16 realisieren. Dies dient ebenfalls der kostengünstigen Produktion des Stators 4.

Die beiden Formenteile 14, 15 der Gussform 16 sind zusammen mit den Kernabschnitten 17, 18 so ausgebildet, dass sie sich in geeigneter Art und Weise entformen lassen, beispielsweise durch ein Verschieben der Formen in Richtung der späteren Achse des hydrodynamischen Retarders 1, oder, bei schrägstehenden Schaufeln 7, durch eine geeignete Drehentformung. Die beiden Teilabschnitte der Auslassöffnung 11 mit unterschiedlichem Durchmesser sind daher so auszubilden, dass sie in der Entformungsrichtung keine Hinterschnitte aufweisen. Dies ist in der Darstellung der Figuren nur prinzipmäßig angedeutet und teilweise nicht exakt dargestellt. Durch die geeignete Ausgestaltung der Formenteile 14, 15, sodass diese leicht entformbar sind, entsteht die Möglichkeit, die Gussform 16 insgesamt als Dauerform auszubilden. Prinzipiell wäre aber selbstverständlich auch der Guss in einer verlorenen Form grundsätzlich denkbar.

## Patentansprüche

1. Stator (4) für einen hydrodynamischen Retarder (1) mit:
1.1 Schaufeln (7);
1.2 einer die Schaufeln (7) tragenden Toruswand (9);
1.3 Auslassöffnungen (11) für ein Arbeitsmedium, welche zwischen den Schaufeln (7) durch die Toruswand (9) verlaufen, wobei
1.4 die Schaufeln (7) und die Toruswand (9) mit den darin angeordneten Auslassöffnungen (11) als ein integriertes Bauteil durch Gießen hergestellt sind; **dadurch gekennzeichnet, dass**
die Auslassöffnungen (11) einen sich in Strömungsrichtung vergrößernden durchströmbaren Querschnitt aufweisen.

2. Stator nach Anspruch 1, **dadurch gekennzeichnet, dass** der sich vergrößernde durchströmbare Querschnitt der Auslassöffnung (11) sich in wenigstens einer Stufe vergrößert.

3. Verfahren zum Herstellen eines Stators (4) für einen hydrodynamischen Retarder (1) mit:
3.1 Schaufeln (7);
3.2 einer die Schaufeln (7) tragenden Toruswand (9);
3.3 Auslassöffnungen (11) für ein Arbeitsmedium, welche zwischen den Schaufeln (7) durch die Toruswand (9) verlaufen; wobei
3.4 Schaufeln (7) und Toruswand (9) durch Gießen hergestellt werden, **dadurch gekennzeichnet, dass**
3.5 die Auslassöffnungen (11) beim Gießen durch geeignete Kerne mit eingebracht werden; und dass die Kerne beziehungsweise Kernabschnitte (17, 18) sich in Richtung der späteren Durchströmung der Auslassöffnung (11) im Durchmesser erweitern.

4. Verfahren nach Anspruch 3, **dadurch gekennzeichnet, dass** die Auslassöffnungen (11) nach dem Gießen nicht spanend nachbearbeitet werden.

5. Verfahren nach Anspruch 3 oder 4, **dadurch gekennzeichnet, dass** der Stator (4) in einer Gussform (16) aus wenigstens zwei Formenteilen (14, 15) gegossen wird, wobei das erste Formenteil (14) die Innenkontur der Toruswand (9) mit den Schaufeln (7) und das zweite Formenteil (15) die Außenkontur der Toruswand (9) abbildet.

6. Verfahren nach Anspruch 5, **dadurch gekennzeichnet, dass** Kerne für die Auslassöffnung (11) mit zumindest einem der Formenteile (14, 15) verbunden sind.

7. Verfahren nach Anspruch 5 oder 6, **dadurch gekennzeichnet, dass** bei der Ausgestaltung der Formenteile (14, 15) jeweils ein sich in Richtung der Auslassöffnung (11) über einen Teil der Tiefe der Auslassöffnung (11) erstreckender Kernabschnitt (17, 18) mit jeweils einem der Formenteile (14, 15) verbunden wird, wobei die axiale Ausdehnung der beiden Kernabschnitte (17, 18) zusammen der Gesamttiefe der Auslassöffnung (11) entspricht.

8. Verfahren nach einem der Ansprüche 1 oder 7, **dadurch gekennzeichnet, dass** der mit dem ersten Formenteil (14) verbundene Kernabschnitt (17) einen geringeren Durchmesser aufweist, als der mit dem zweiten Formenteil (15) verbundene Kernabschnitt (18).

## Claims

1. A stator (4) for a hydrodynamic retarder (1), comprising:
1.1 blades (7);
1.2 a toroidal wall (9) carrying the blades (7);
1.3 outlet openings (11) for a working medium which extend between the blades (7) through the toroidal wall (9);
1.4 the blades (7) and the toroidal wall (9) with the outlet openings (11) arranged therein are produced as an integrated component by casting, **characterized in that**
the outlet openings (11) have a cross-section with through-flow capability which enlarges in the direction of flow.

2. A stator according to claim 1, **characterized in that** the enlarging cross-section of the outlet opening (11) with through-flow capability increases in at least one step.

3. A method for producing a stator (4) for a hydrodynamic retarder (1), comprising:
3.1 blades (7);
3.2 a toroidal wall (9) carrying the blades (7);
3.3 outlet openings (11) for a working medium, which outlet openings extend between the blades (7) through the toroidal wall (9), with
3.4 the blades (7) and the toroidal wall (9) being produced by casting, **characterized in that**
3.5 the outlet openings (11) are co-introduced during casting by suitable cores, and the cores or core sections (17, 18) expand in the diameter in the direction of the later through-flow of the outlet opening (11).

4. A method according to claim 3, **characterized in that** the outlet openings (11) are not subsequently machined after casting.

5. A method according to claim 3 or 4, **characterized in that** the stator (4) is cast in a casting mold (16) consisting of at least two parts (14, 15) of the mold, with the first part (14) of the mold forming the inner contour of the toroidal wall (9) with the blades (7) and the second part (15) of the mold forming the outer contour of the toroidal wall (9).

6. A method according to claim 5, **characterized in that** cores for the outlet openings (11) are connected with at least one of the parts (14, 15) of the mold.

7. A method according to claim 5 or 6, **characterized in that** in the configuration of the parts (14, 15) of the mold one respective core section (17, 18) extending in the direction of the outlet opening (11) over a part of the depth of the outlet opening (11) is respectively connected with one of the parts (14, 15) of the mold, with the axial extension of the two core sections (17, 18) jointly corresponding to the overall depth of the outlet opening (11).

8. A method according to one of the claims 1 or 7, **characterized in that** the core section (17) connected with the first part (14) of the mold has a smaller diameter than core section (18) connected with the second part (15) of the mold.

## Revendications

1. Stator (4) pour retardateur hydrodynamique (1) comprenant:
1.1 des pales (7) ;
1.2 une paroi toroïdale (9) portant les pales (7) ;
1.3 des ouvertures de sortie (11) pour fluide de travail, ouvertures traversant la paroi toroïdale (9) entre les pales (7), où
1.4 les pales (7) et la paroi toroïdale (9) avec les ouvertures de sortie (11) agencées dans celle-ci sont obtenues par coulage pour produire un composant intégré ;
**caractérisé en ce que**
les ouvertures de sortie (11) présentent une section transversale à travers laquelle peut passer un liquide et allant grandissant dans le sens d'écoulement.

2. Stator selon la revendication 1, **caractérisé en ce que** la section transversale de l'ouverture de sortie (11) à travers laquelle peut passer un liquide et allant grandissant va grandissant en au moins une phase.

3. Procédé de fabrication d'un stator (4) pour retardateur hydrodynamique (1) comprenant :
3.1 des pales (7) ;
3.2 une paroi toroïdale (9) portant les pales (7) ;
3.3 des ouvertures de sortie (11) pour fluide de travail, ouvertures traversant la paroi toroïdale (9) entre les pales (7) ; où
3.4 les pales (7) et la paroi toroïdale (9) sont obtenues par coulage, **caractérisé en ce que**
3.5 les ouvertures de sortie (11) sont intégrées lors du coulage à travers des noyaux adaptés ; et que les noyaux ou portions de noyau s'agrandissent en direction de la traversée suivante de l'ouverture de sortie (11).

4. Procédé selon la revendication 3, **caractérisée en ce que** les ouvertures de sortie (11) après coulage ne sont pas usinées par enlèvement de copeaux.

5. Procédé selon la revendication 3 ou 4, **caractérisé en ce que** le stator (4) est coulé dans un moule de coulée (16) composé d'au moins deux parties de moule (14, 15), où la première partie de moule (14) constitue le contour interne de la paroi toroïdale (9) avec les pales (7) et la seconde partie de moule (15) le contour externe de la paroi toroïdale (9).

6. Procédé selon la revendication 5, **caractérisé en ce que** des noyaux prévus pour l'ouverture de sortie (11) sont connectés à au moins l'une des parties de moule (14, 15).

7. Procédé selon la revendication 5 ou 6, **caractérisé en ce qu'**au moins une partie de noyau (17, 18) s'étendant en direction de l'ouverture de sortie (11) sur une portion de la profondeur de l'ouverture de sortie (11) est connectée respectivement à l'une des parties de moule (14, 15) et ce, lors de la conception des parties de moule (14,15), où l'allongement axial des deux parties de noyau (17, 18) prises ensemble correspond à la profondeur globale de l'ouverture de sortie (11).

8. Procédé selon l'une des revendications 1 ou 7, **caractérisé en ce que** la partie de noyau (17) connectée à la première partie de moule (14) présente un diamètre plus petit que la partie de noyau (18) connectée à la seconde partie de moule (15).
